# FASCICULE DE BREVET EUROPEEN

(11) **EP 1 851 566 B1**
(45) Date de publication et mention de la délivrance du brevet: **12.02.2014**
(21) Numéro de dépôt: 06708445.9
(22) Date de dépôt: 22.02.2006
(51) Int. Cl.: G01S 5/30

(54) **LOCALISATION D'UNE SONDE DE CONTROLE NON DESTRUCTIF**
LOKALISIEREN EINES ZERSTÖRUNGSFREIEN KONTROLLFÜHLERS
LOCATING A NON-DESTRUCTIVE CONTROL PROBE

(30) Priorité: 25.02.2005 FR 0550519
(43) Date de publication de la demande: 07.11.2007
(73) Titulaire: European Aeronautic Defence and Space Company - EADS France, 75016 Paris (FR)
(72) Inventeur: ROLET, Sébastien, F-31830 Plaisance du Touch (FR); CARPENTIER, Capucine, CB4 1JT Cambridge (GB)
(74) Mandataire: Ahner, Philippe
(86) Numéro de dépôt international: PCT/EP2006/060173
(87) Numéro de publication internationale: WO 2006/089905

(56) Documents cités:
- US-A- 3 731 273
- US-A- 4 814 552
- US-A- 4 991 148
- US-A- 6 141 293

## Description

### DOMAINE TECHNIQUE

L'invention se situe dans le domaine du contrôle non destructif, et concerne plus spécifiquement les mesures effectuées *in situ*.

L'invention se rapporte à la possibilité d'effectuer une analyse localisée d'un matériau, voire sous la forme de cartographie, sans outillage lourd de positionnement de la sonde de mesure. L'invention concerne ainsi un procédé pour déterminer la localisation de la mesure, ainsi qu'un système permettant ces déterminations.

### ÉTAT DE LA TECHNIQUE ANTÉRIEURE

Dans de nombreux domaines, comme par exemple en médecine, il peut s'avérer indispensable d'effectuer des analyses et contrôles de matériaux sans altérer leurs propriétés.

Un appareillage de contrôle non destructif (CND) comprend habituellement une sonde de mesure, avec un ou plusieurs émetteurs et un ou plusieurs récepteurs d'une caractéristique physique ou physico-chimique, connectée à un module de traitement des signaux. Habituellement, le module de traitement est relié de façon fonctionnelle à un écran permettant d'afficher les caractéristiques ainsi obtenues.

Les hétérogénéités recherchées dans les matériaux à analyser peuvent cependant être de taille variable, et de profils divers : une cartographie est alors souhaitable. De plus, le matériau à tester peut faire partie d'un ensemble, et il est souvent préférable de ne pas l'en isoler pour des raisons de coût de procédure.

En particulier, dans le domaine aéronautique, le CND est utilisé pour déterminer les propriétés d'un matériau, par exemple composant le fuselage d'un avion, et vérifier leur compatibilité avec les normes en vigueur (épaisseur, présence de fissures ou criques, de points de corrosion,...). A cette fin, les contrôles par des tests à ultrasons ou à courants de Foucault sont particulièrement utiles pour évaluer la résistance à un choc, par exemple, pour repérer et mesurer les défauts d'un spécimen.

Une cartographie est le résultat de l'association d'une grandeur physique donnée par une sonde, de CND par exemple, à sa position. Par ailleurs, dans le cadre de la détection de défauts par ultrasons, des systèmes de positionnement existent, qui codent la position de la sonde par émission acoustique avec des émetteurs et des récepteurs de type céramique piézoélectrique (système BAT™ de Tecnatom par exemple). La position est généralement obtenue par un système de repérage mécanique, de type bras ou rampe de déplacement de la sonde. Ce type de localisation est cependant très lourd à mettre en oeuvre, et nécessite habituellement le déplacement de la pièce à analyser pour la positionner au niveau du système de repérage, et donc l'existence d'une armature sur laquelle sont fixés les récepteurs. Un système de localisation d'un émetteur par deux récepteurs est connu du brevet US 4 814 552.

### EXPOSÉ DE L'INVENTION

L'invention propose, parmi autres avantages, un système et un procédé permettant de pallier les inconvénients mentionnés ci-dessus des matériels existants et de réaliser par exemple une cartographie *in situ* d'un matériau à analyser. En particulier, grâce à l'invention, il est possible de récupérer des coordonnées, par exemple cartésiennes, d'une sonde de mesure, pour la création d'une cartographie santé de la matière analysée.

Sous un de ses aspects, l'invention concerne un système de localisation comprenant un émetteur et deux récepteurs d'un signal, et un dispositif permettant de mesurer le délai entre émission et réceptions. De préférence, la mesure des délais, c'est-à-dire les durées correspondant aux décalages entre les signaux, est transmise à des moyens pour mesurer la position de l'émetteur, par exemple par triangulation.

Le système selon l'invention est particulièrement facile à mettre en oeuvre du fait que chacun des récepteurs et émetteur peut être positionné de façon indépendante. Par exemple, lorsque le signal utilisé pour la détermination de la durée est composé d'ondes acoustiques, les récepteurs sont associés à des moyens pour être solidarisés de façon réversible à une surface, comme des ventouses, sans être couplés l'un à l'autre. Selon l'invention, l'émetteur est sous forme d'un film piézoélectrique associé à un autocollant, de façon à être couplé à l'appareillage dont on veut déterminer la localisation.

La détermination des distances entre émetteur et récepteurs est avantageusement effectuée grâce à une impulsion de synchronisation, qui peut être émise à fréquence fixe dans le cas où une cartographie est envisagée. Les récepteurs peuvent par exemple être couplés à des moyens de mesure du temps déclenchés par l'impulsion en même temps que l'émetteur est activé, et qui s'arrêtent au moment où les récepteurs reçoivent le signal émis lors de l'impulsion.

Cette configuration permet de n'utiliser par exemple que deux récepteurs pour une détermination bi-dimensionnelle de la localisation de la sonde émettrice.

Avantageusement, les différents éléments utilisés pour déterminer les durées sont placés dans un boîtier auquel émetteur et récepteurs sont couplés par liaison filaire. De préférence, ces informations concernant les durées sont transmises à un logiciel de détermination de la position par communication de données, par exemple par liaison USB. De façon préférée, le logiciel de détermination est associé à l'appareillage de mesure, c'est-à-dire aux moyens d'analyse couplés à la sonde.

Il est avantageux qu'un calibrage soit effectué au préalable des localisations. Le système peut comprendre des moyens pour calibrer, et en particulier un dispositif de guidage de cette étape, par exemple un logiciel. Il peut être souhaitable de disposer d'un auxiliaire de positionnement pour accélérer la mise en place de l'émetteur lors du calibrage.

Sous un autre aspect, l'invention se rapporte à un procédé de localisation d'une sonde de mesure, qui utilise le couplage de la sonde avec un émetteur et la localisation de cet émetteur par triangulation grâce à deux récepteurs. De préférence, un système selon l'invention est utilisé.

Sous un aspect préféré, le procédé est utilisé dans un procédé de cartographie d'une surface, dans lequel une sonde est localisée à fréquence de préférence régulière, et les données de localisation sont associées aux mesures de la sonde. Pour augmenter la précision, les récepteurs sont placés hors de la surface à cartographier.

Les procédés selon l'invention sont de préférence précédés par un calibrage qui ne nécessite pas la mesure de la distance séparant les récepteurs. Avantageusement, le calibrage est effectué par positionnement de l'émetteur en trois points régulièrement espacés le long de la médiatrice des deux récepteurs. Le calibrage peut être assisté, par un logiciel et un auxiliaire de positionnement.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
La figure 1 représente schématiquement un système de localisation et de cartographie selon un mode de réalisation préféré de l'invention.
La figure 2 illustre un procédé de calibrage préalable à une cartographie selon un mode de réalisation de l'invention.

### EXPOSÉ DÉTAILLÉ DE MODES DE RÉALISATION PARTICULIERS

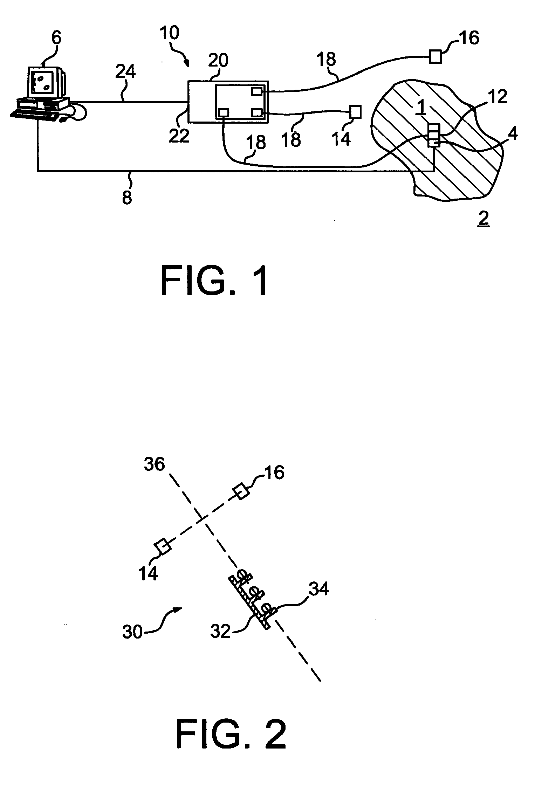

Tel que schématisé sur la figure 1, une zone 1 d'une pièce 2 quelconque est analysée au moyen d'une sonde 4 par un opérateur. Par « opérateur », il faut comprendre tant un opérateur humain que, par exemple si l'environnement de la pièce 2 est protégé, un bras manipulateur actionné manuellement à distance.

La pièce 2 dont est issue la partie 1 à analyser, qui peut par ailleurs en faire partie intégrante, peut par exemple être une région du fuselage d'un avion, un composant d'un moteur, etc. Tant la pièce 2 que la zone 1 peuvent être de différentes configurations, mais habituellement, elles présentent une courbure moyenne voire nulle, et des irrégularités. La surface de la zone 1 peut être par exemple de l'ordre de 50 à 400 cm², et classiquement elle est inférieure au mètre carré : en effet, le déplacement manuel de la sonde 4 peut s'avérer fastidieux pour des pièces trop grandes. De préférence, la zone à analyser 1 est laissée en position fonctionnelle au sein de la pièce 2 : par exemple, dans le cadre d'un choc sur un avion, l'analyse est effectuée directement lors d'une opération de maintenance.

Dans une telle application aéronautique, il est préféré que la sonde 4 utilise les ultrasons ou les courants de Foucault pour déterminer les caractéristiques du matériau 1. Tel qu'il est usuel, la sonde 4 est reliée à des moyens pour analyser les données de contrôle, si possible les mémoriser, et les afficher ; le plus souvent, la sonde 4 est ainsi connectée à un microordinateur 6 possédant les logiciels de traitement adaptés. La liaison 8 entre ces deux éléments 4, 6 peut être de tout type connu. De même, la distance entre les opérations de mesure et d'analyse et/ou stockage des données peut être plus ou moins grande, selon que l'opérateur est dans la même pièce que l'ordinateur 6 ou à distance. De fait, quel que soit l'appareillage CND 4, 6, 8, le système de localisation 10 selon l'invention peut être utilisé.

Le système de localisation 10 comprend un émetteur 12 d'un phénomène physique détectable, de préférence des ondes acoustiques. L'émetteur 12 se présente avantageusement sous la forme d'un film piézoélectrique (par exemple un PVDF (fluorure de polyvinylidène) ou un copolymère) que l'on peut coupler à toute sonde CND 4, par exemple par la présence de moyens autocollants. La taille de l'émetteur 12 peut être choisie en fonction de la taille de la sonde 4, de la place disponible pour l'y coupler, mais est choisie pour émettre suffisamment d'ultrasons lorsqu'il est sollicité, afin de ne pas ralentir à l'excès leur détection. En particulier, un film en PVDF de l'ordre du cm², par exemple 5 x 10 mm², s'est avéré probant. L'émetteur 12 peut être choisi en fonction de la mesure effectuée : le système 10 selon l'invention peut comprendre une multitude d'éléments émetteurs 12, dont l'un seulement peut être utilisé au moment de l'analyse selon la sonde 4.

Le signal émis par l'émetteur 12 est destiné à être capté par plusieurs récepteurs ; de préférence en particulier, deux récepteurs ultrasonores 14, 16 de type céramiques piézoélectriques, disponibles dans le commerce notamment, sont utilisés. Avantageusement, les récepteurs 14, 16 sont munis de moyens pour les solidariser de façon amovible à une surface, en particulier de la pièce 2, par exemple des ventouses.

Les émetteur 12 et récepteurs 14, 16 sont reliés, de préférence par liaisons filaires 18, à un boîtier 20 du système de localisation 10. Dans le dispositif 10 selon l'invention, les récepteurs 14, 16 sont totalement indépendants l'un de l'autre, et indépendants de l'émetteur 12 : chaque élément 14, 16 peut être positionné en tout point accessible sans présence d'un cadre de maintien ou d'un rail de guidage, et l'émetteur 12 peut être déplacé en toute direction par rapport à eux.

De préférence, les deux récepteurs 14, 16 sont localisés à l'extérieur de la zone 1 à analyser, sur la même surface de la pièce 2.

La localisation de la sonde CND 2 est effectuée par triangulation, c'ést-à-dire que la distance du film émetteur 12 par rapport à chacun des récepteurs 14, 16 permet de déterminer des coordonnées de l'émetteur 12. En particulier, le délai entre chaque émission et réception permet de déterminer la localisation relative de la sonde 4 par l'intermédiaire de la vitesse de propagation du phénomène physique et de la distance entre les récepteurs. Une synchronisation entre les mesures est donc souhaitable.

Dans le domaine de la bureautique, pour la reconnaissance de la position, il est connu d'utiliser par exemple une synchronisation par diode infrarouge (système Mimio™).

Selon l'invention, la synchronisation est effectuée grâce à une impulsion électrique sollicitant le film piézoélectrique 12 ; de préférence, chaque récepteur 14, 16 est couplé à un compteur, chronomètre ou autre moyen pour déterminer une durée. Lors de l'envoi d'une impulsion électrique, les compteurs des récepteurs 14, 16 se déclenchent, en même temps que le film piézoélectrique 12 émet un signal ultrasonore. Lorsque les deux récepteurs piézo-céramiques 14, 16 reçoivent le signal émis par le film piézoélectrique 12, les compteurs s'arrêtent. Si la vitesse des ultrasons est connue, la valeur des compteurs permet de déterminer la distance séparant la sonde 4 de chacun des récepteurs 14, 16 ; par triangulation, il est possible de déterminer les coordonnées X, Y de la sonde 4 dans un repère basé sur les deux récepteurs.

Il est possible d'effectuer le calcul des coordonnées directement au niveau du boîtier 20 du système de localisation 10, par exemple par une carte électronique. Avantageusement, afin d'alléger le dispositif 10, la carte électronique présente dans le boîtier 20 n'est utilisée que pour déterminer les valeurs des compteurs, le reste des calculs pouvant être effectué à distance. A cette fin, le boîtier 20 est muni d'un port de communication 22 permettant le transfert des données de la carte électronique à des moyens de calcul.

Avantageusement, pour notamment assouplir la configuration et réduire les coûts, le port de communication 22 est un port USB qui permet d'utiliser le dispositif 10 selon l'invention comme un périphérique informatique léger et facilement transportable, susceptible d'être connecté à n'importe quel ordinateur. De préférence, la liaison USB 24 est également utilisée pour gérer les impulsions de synchronisation. Les données à transférer ne nécessitent cependant pas un débit rendant ce type de liaison indispensable.

En particulier, il s'avère particulièrement avantageux d'effectuer les calculs de triangulation par les mêmes moyens que ceux utilisés pour analyser les données émises par la sonde 4. Ainsi, le port USB 22 du boîtier 20 peut être relié à l'ordinateur 6 auquel est couplée la sonde 4, et qui est doté dans ce cas d'un logiciel de positionnement. Ce couplage 24 est particulièrement avantageux si une cartographie est désirée, c'est-à-dire si les résultats donnés par la sonde 4 sont exposés en correspondance avec une représentation de la zone 1.

Pour une cartographie, des valeurs successives de positions sont nécessaires. Il est possible, suivant la distance entre émetteur 12 et récepteurs 14, 16 (c'est-à-dire la durée minimale d'une réception), la précision de cartographie souhaitée et la vitesse de déplacement de la sonde 4, d'utiliser différentes fréquences d'impulsions, mais de préférence inférieures à 150 ou 200 Hz pour éviter que deux séquences émission/réception ne se chevauchent. Une valeur de 80 Hz pour des ultrasons s'est révélée adaptée.

En particulier dans ce cas d'une cartographie, mais également si seule une détermination précise de la localisation de la sonde 4 est souhaitée, une calibration peut être effectuée : la synchronisation des compteurs est corrigée, la position des récepteurs 14, 16 est déterminée, de façon à obtenir ensuite une localisation « absolue » (c'est-à-dire sous réserve des limites physiques) des résultats.

Avantageusement, selon l'invention, la calibration est effectuée sans mesure de la distance entre les récepteurs 14, 16, résultat entaché d'erreurs si les deux récepteurs sont totalement indépendants l'un de l'autre, notamment en l'absence de rail de couplage, et localisés sur une surface 2 courbe par exemple.

De façon préférée, la calibration est assistée, c'est-à-dire que le logiciel de positionnement par exemple possède un module guidant les différentes étapes de calibrage. En particulier, préalablement aux mesures, l'émetteur 12 est positionné sur la zone à analyser 1 en au moins deux points séparés d'une longueur fixe le long de la médiatrice, et la valeur des distances déterminée. Avantageusement, un gabarit ou auxiliaire de positionnement 30, tel qu'illustré en figure 2, est associé au système 10 selon l'invention pour assister le positionnement de la sonde lors de cette étape.

Selon un mode de réalisation préféré, le procédé de calibration permet de s'affranchir du paramètre « température » : trois points sont utilisés de façon à obtenir un système d'équations permettant de déterminer la vitesse des ultrasons ou ondes acoustiques par le calcul, donc sans avoir à connaître la température à laquelle est effectuée la mesure. Ceci est particulièrement avantageux dans le cadre aéronautique où la température peut varier fortement selon la pièce concernée et la localisation du site d'opération. Cette étape permet d'alléger le système, par l'absence de moyens pour mesurer la température, et d'augmenter la fiabilité du résultat en supprimant une source d'imprécisions supplémentaire. La mesure des caractéristiques de la zone 1 en tant que telle, même dans le cas d'une cartographie, est suffisamment rapide pour considérer la température comme constante au long du procédé. Il est cependant possible de procéder à des calibrations régulières.

En particulier, en début de CND, l'émetteur 12 est solidarisé sur la sonde 4 ; les deux récepteurs 14, 16 sont « collés » sur la surface 2 du matériau à analyser. Un gabarit 30, par exemple une règle 32 munie de trois branches parallèles équidistantes 34, est positionné sensiblement le long de la médiatrice 36 des deux récepteurs 14, 16. La sonde 4 est positionnée successivement le long des trois branches 34 sur la médiatrice 36 : chaque positionnement est optimisé par l'intermédiaire d'une assistance du logiciel et en fonction des temps fournis par les compteurs associés aux récepteurs. 14, 16. On obtient ainsi deux intervalles identiques de longueur connue : il est possible d'en déduire la vitesse des ultrasons nécessaire aux déterminations de localisation, et la distance entre émetteurs permettant une cartographie. Cette étape est très rapide, et ne prolonge la mesure proprement dite que de quelques secondes, moins de 20 s pour un opérateur technicien.

La mesure proprement dite par la sonde 4 peut alors avoir lieu. La sonde 4 est déplacée sur la zone 1, habituellement par balayage, les caractéristiques du matériau 2 sont stockées et analysées par l'ordinateur 6 qui peut les coupler avec les données du système 10, et les présenter selon toute forme connue (graphique notamment).

Le système de localisation 10 décrit utilise l'émission acoustique ; d'autres possibilités sont ouvertes. Il est applicable à toute technique de contrôle non destructif, tout en étant faiblement encombrant, tant du niveau place que poids (par exemple, il peut être rangé dans la poche d'un vêtement de travail, voire d'une veste). En particulier, il peut être adapté à toute sonde 4 existante et utilisée pour la maintenance, y compris une sonde ultrasons, la fréquence de travail entre les deux opérations de positionnement et d'analyse étant très différente. Les dimensions et la concavité de la zone 1 de contrôle sont libres, dans la limite des capacités de l'appareil 10 et de la sonde 4.

Le système 10 selon l'invention est particulièrement simple à mettre en oeuvre, surtout dans le mode de réalisation avec liaison USB. Il ne nécessite pas de matériel onéreux, notamment dans le cas où des liaisons filaires 18 sont utilisées, les logiciels de traitement des données courants pour ce genre de calcul pouvant être utilisés.

Il est envisageable, en alourdissant le système 10, de réaliser une cartographie tridimensionnelle, par exemple en utilisant un troisième récepteur. Cependant, ces alternatives se font aux détriments de la facilité et de la rapidité d'emploi.

## Revendications

1. Système de localisation (10) d'un appareil (4), comprenant :
- un émetteur (12) d'un signal ;
- exactement deux récepteurs (14, 16) du signal émis ;
- des moyens pour activer l'émetteur (12) ;
- des moyens pour déterminer la durée entre l'émission du signal issu de l'activation et sa réception par chaque récepteur (14, 16) ;
les récepteurs (14, 16) étant totalement indépendants l'un de l'autre et indépendants de l'émetteur (12) de sorte à pouvoir être localisés de façon indépendante les uns des autres, **caractérisé en ce que** l'appareil est une sonde de mesure couplée à l'émetteur (12) qui est sous forme d'un film piézoélectrique par des moyens autocollants.

2. Système selon la revendication 1 dans lequel l'émetteur (12) comprend des moyens pour être couplé à l'appareil (4) et/ou chaque récepteur (14, 16) comprend des moyens pour être associé à une surface (2).

3. Système selon l'une des revendications 1 ou 2 comprenant des moyens pour émettre une impulsion de synchronisation en tant que moyens pour activer l'émetteur (12) et dans lequel les moyens pour déterminer la durée sont couplés de façon opérationnelle aux moyens pour émettre l'impulsion.

4. Système selon la revendication 3 dans lequel le signal est ultrasonore et les récepteurs (14, 16) sont associés à des compteurs pour mesurer le délai entre l'impulsion et la réception des ultrasons par les récepteurs (14, 16).

5. Système selon l'une des revendications 2 à 4 dans lequel les moyens pour émettre une impulsion sont adaptés pour émettre l'impulsion de façon répétée, notamment à fréquence fixe.

6. Système selon l'une des revendications 1 à 5 comprenant un boîtier (20) comprenant les moyens pour activer l'émetteur (12), les moyens pour déterminer la durée entre l'émission du signal issu de l'activation et sa réception par chaque récepteur (14, 16), et auquel l'émetteur (12) et les récepteurs (14, 16) sont couplés par liaisons filaires (18).

7. Système selon l'une des revendications 1 à 6 comprenant en outre des moyens pour déterminer la position de l'émetteur (12) par triangulation en fonction des durées déterminées.

8. Système selon la revendication 6 comprenant en outre des moyens pour déterminer la position de l'émetteur (12) par triangulation en fonction des durées déterminées et dans lequel le boîtier comprend un port de communication (22) auquel sont connectés les moyens pour déterminer la position.

9. Système selon la revendication 8 dans lequel le port de communication (22) est un port USB.

10. Système selon l'une des revendications 7 à 9 comprenant des moyens pour calibrer la position relative des émetteur (12) et récepteurs (14, 16).

11. Système selon la revendication 10 dans lequel les moyens pour calibrer comprennent un auxiliaire au positionnement (30) et des moyens pour guider le procédé de calibrage.

12. Système selon l'une des revendications précédentes 1 à 11 dans lequel l'appareil est une sonde de mesure d'un appareillage de contrôle non destructif (CND).

13. Procédé pour déterminer la localisation d'une sonde de mesure (4) sur une zone à analyser (1) comprenant :
- le couplage de la sonde de mesure (4) avec un émetteur d'un signal (12) qui est sous forme d'un film piézoélectrique par des moyens autocollants.;
- la mise en place de exactement deux récepteurs (14, 16) totalement indépendants l'un de l'autre et indépendants de l'émetteur (12), sur une surface (2) comprenant la zone à analyser (1) ;
- l'émission d'une impulsion pour activer l'émetteur de signal (12) ;
- la mesure de la durée entre l'impulsion et la réception du signal par les récepteurs (14, 16) ;
- la détermination de la position de la sonde (4) par triangulation à partir des durées mesurées.

14. Procédé selon la revendication 13 dans lequel la zone à analyser (1) est une partie d'une surface d'un matériau et les récepteurs (14, 16) sont positionnés sur la surface (2) à l'extérieur de la partie à analyser (1).

15. Procédé selon l'une des revendications 13 à 14 comprenant le calibrage de la localisation des deux récepteurs (14, 16).

16. Procédé selon la revendication 15 dans lequel le calibrage comprend le positionnement de la sonde (4) en deux points au moins situés sensiblement au niveau de la médiatrice (36) entre deux récepteurs (14, 16).

17. Procédé selon la revendication 16 dans lequel le calibrage comprend le positionnement de la sonde (4) en au moins trois points espacés à intervalles réguliers le long de la médiatrice (36).

18. Procédé selon l'une des revendications 16 à 17 dans lequel le positionnement de la sonde (4) est effectué au moyen d'un auxiliaire (30) de positionnement.

19. Procédé pour cartographier une surface utilisant un procédé selon l'une des revendications 13 à 18 dans lequel les étapes d'émission, de mesure de la durée et de détermination sont répétées pour chaque point de cartographie.

20. Procédé selon l'une des revendications 13 à 19 dans lequel émetteur (12) et récepteurs (14, 16) utilisent un signal ultrasonore.

21. Procédé selon l'une des revendications 13 à 20 dans lequel émetteur et récepteurs font partie d'un système selon l'une des revendications 1 à 12.

22. Procédé selon l'une des revendications 13 à 21 dans lequel la détermination de la position de la sonde (4) est associée à l'analyse de la mesure de la sonde (4).

## Patentansprüche

1. System (10) zur Lokalisierung eines Geräts (4), umfassend:
- einen Sender (12) für ein Signal;
- exakt zwei Empfänger (14, 16) für das ausgesandte Signal,
- Mittel zur Aktivierung des Senders (12);
- Mittel zur Bestimmung der Dauer zwischen der Aussendung des durch die Aktivierung ausgelösten Signals und seinem Empfang durch jeden Empfänger (14, 16);
wobei die Empfänger (14, 16) völlig unabhängig voneinander sind und unabhängig von dem Sender (12), sodass sie unabhängig voneinander lokalisiert werden können, **dadurch gekennzeichnet, dass** das Gerät eine Messsonde ist, die an den Sender (12), der die Form eines piezoelektrischen Films hat, durch Selbstklebemittel gekoppelt ist.

2. System nach Anspruch 1, bei dem der Sender (12) Mittel zur Kopplung an das Gerät (4) umfasst, und/oder jeder Empfänger (14, 16) Mittel umfasst, um einer Oberfläche (2) zugeordnet zu sein.

3. System nach einem der Ansprüche 1 oder 2, umfassend Mittel zur Aussendung eines Synchronisierungspulses als Mittel zur Aktivierung des Senders (12), und wobei die Mittel zur Bestimmung der Dauer in operativer Weise an die Mittel zum Aussenden des Pulses gekoppelt sind.

4. System nach Anspruch 3, bei dem das Signal ein Ultraschallsignal ist, und die Empfänger (14, 16) Zählern zugeordnet sind, um die Verzögerung zu messen zwischen dem Puls und dem Empfang der Ultraschallsignale durch die Empfänger (14, 16).

5. System nach einem der Ansprüche 2-4, bei dem die Mittel zum Aussenden eines Pulses dazu ausgelegt sind, den Puls wiederholt auszusenden, insbesondere mit fester Frequenz.

6. System nach einem der Ansprüche 1-5, umfassend ein Gehäuse (20), das die Mittel zum Aktivieren des Senders (12), die Mittel zum Bestimmen der Dauer zwischen der Aussendung des durch die Aktivierung ausgelösten Signals und seinem Empfang durch jeden Empfänger (14, 16) enthält, und an das der Sender (12) und die Empfänger (14, 16) durch Drahtverbindungen (18) gekoppelt sind.

7. System nach einem der Ansprüche 1-6, ferner umfassend Mittel zur Bestimmung der Position des Senders (12) durch Triangulation als Funktion der bestimmten Dauern.

8. System nach Anspruch 6, ferner umfassend Mittel zur Bestimmung der Position des Senders (12) durch Triangulation als Funktion der bestimmten Dauern, und wobei das Gehäuse einen Kommunikationsanschluss (22) enthält, an den die Mittel zur Bestimmung der Position angeschlossen sind.

9. System nach Anspruch 8, bei dem der Kommunikationsanschluss (22) ein USB-Anschluss ist.

10. System nach einem der Ansprüche 7-9, umfassend Mittel zur Kalibrierung der Relativposition des Senders (12) und der Empfänger (14, 16).

11. System nach Anspruch 10, bei dem die Mittel zur Kalibrierung eine Positionierungshilfseinrichtung (30) und Mittel zur Führung des Kalibrierverfahrens umfassen.

12. System nach einem der vorhergehenden Ansprüche 1-11, bei dem das Gerät eine zerstörungsfreie Messsonde eines Kontrollgeräts (CND) ist.

13. Verfahren zur Bestimmung der Lokalisierung einer Messsonde (4) in einer zu analysierenden Zone (1), umfassend:
- die Kopplung der Messsonde (4) mit einem Signalsender (12), der die Form eines piezoelektrischen Films hat, durch Selbstklebemittel;
- die Anordnung von exakt zwei Empfängern (14, 16), die völlig unabhängig voneinander sind und unabhängig vom Sender (12), auf einer Oberfläche (2), die die zu analysierende Zone (1) enthält;
- die Aussendung eines Pulses zur Aktivierung des Signalsenders (12);
- die Messung der Dauer zwischen dem Puls und dem Empfang des Signals durch die Sender (14, 16);
- die Bestimmung der Position der Sonde (4) durch Triangulation ausgehend von den gemessenen Dauern.

14. Verfahren nach Anspruch 13, bei dem die zu analysierende Zone (1) ein Teil einer Materialoberfläche ist, und die Sender (14, 16) auf der Oberfläche (2) außerhalb des zu analysierenden Teils (1) positioniert sind.

15. Verfahren nach einem der Ansprüche 13-14, umfassend die Kalibrierung der Lokalisierung der zwei Empfänger (14, 16).

16. Verfahren nach Anspruch 15, bei dem die Kalibrierung die Positionierung der Sonde (4) an zwei Punkten umfasst, die wenigstens im Wesentlichen im Bereich der Mittelsenkrechten (36) zwischen zwei Empfängern (14, 16) angeordnet sind.

17. Verfahren nach Anspruch 16, bei dem die Kalibrierung die Positionierung der Sonde (4) an wenigstens 3 Punkten umfasst, die entlang der Mittelsenkrechten (36) in regelmäßigen Intervallen beabstandet sind.

18. Verfahren nach einem der Ansprüche 16-17, bei dem die Positionierung der Sonde (4) mittels einer Positionierungshilfseinrichtung (30) erfolgt.

19. Verfahren zur Kartographierung einer Oberfläche unter Verwendung eines Verfahrens nach einem der Ansprüche 13-18, bei dem die Schritte des Sendens, des Messens der Dauer und der Bestimmung für jeden Kartographierungspunkt wiederholt werden.

20. Verfahren nach einem der Ansprüche 13-19, bei dem der Sender (12) und die Empfänger (14, 16) ein Ultraschallsignal verwenden.

21. Verfahren nach einem der Ansprüche 13-20, bei dem der Sender und die Empfänger Teil eines Systems nach einem der Ansprüche 1-12 sind.

22. Verfahren nach einem der Ansprüche 13-21, bei dem die Bestimmung der Position der Sonde (4) der Analyse der Messung der Sonde (4) zugeordnet ist.

## Claims

1. A system (10) for localizing an apparatus (4), comprising:
- a signal emitter (12);
- exactly two receivers (14, 16) of the emitted signal;
- means for activating the emitter (12);
- means for determining the duration between the emission of the signal stemming from the activation and its reception by each receiver (14, 16);
the receivers (14, 16) being independant of each other and independant of the emitter (12) so as to be localized independently of each other,
**characterized in that**
the apparatus is a measuring probe coupled to the emitter (12), which has the shape of a piezoelectric film, by self-adhesive means.

2. The system according to claim 1, wherein the emitter (12) comprises means in order to be coupled with the apparatus (4) and/or each receiver (14, 16) comprises means in order to be associated with a surface (2).

3. The system according to any of claims 1 or 2, comprising means for emitting a synchronization pulse as means for activating the emitter (12) and wherein means for determining the duration are operationally coupled with means for emitting the pulse.

4. The system according to claim 3, wherein the signal is ultrasonic and the receivers (14, 16) are associated with counters for measuring the delay between the pulse and the reception of the ultrasonic waves by the receivers (14, 16).

5. The system according to any of claims 2 to 4, wherein the means for emitting a pulse are adapted so as to emit the pulse repeatedly, notably at a fixed rate.

6. The system according to any of claims 1 to 5, comprising a casing (20) comprising means for activating the emitter (12), the means for determining the duration between the emission of the signal stemming from the activation and its reception by each receiver (14, 16), and with which the emitter (12) and the receivers (14, 16) are coupled by wire connections (18).

7. The system according to any of claims 1 to 6, further comprising means for determining the position of the emitter (12) by triangulation according to the determined durations.

8. The system according to claim 6, further comprising means for determining the position of the emitter (12) by triangulation according to the determined durations and wherein the casing comprises a communications port (22) to which are connected the means for determining the position.

9. The system according to claim 8, wherein the communications port (22) is a USB port.

10. The system according to any of claims 7 to 9, comprising means for calibrating the relative position of the emitter (12) and receivers (14, 16).

11. The system according to claim 10, wherein the calibration means comprise an auxiliary for positioning (30) and means for guiding the calibration process.

12. The system according to any of claims 1 to 11, wherein the apparatus is a measuring probe of a non-destructive control (NDC) apparatus.

13. The method for determining the localization of a measuring probe (4) on an area to be analyzed (1) comprising:
- coupling of the measuring probe (4) with an emitter of a signal (12), which has the shape of a piezoelectric film, by self-adhesive means
- placement of exactly two independent receivers (14, 16), independant of each other and independant of the emitter (12), on a surface (2) comprising the area to be analyzed (1);
- emission of a pulse for activating the signal emitter (12);
- measurement of the duration between the pulse and the reception of the signal by the receivers (14, 16);
- determination of the position of the probe (4) by triangulation from the measured durations.

14. The method according to claim 13, wherein the area to be analyzed (1) is a portion of a surface of a material and the receivers (14, 16) are positioned on the surface (2) outside the portion to be analyzed (1).

15. The method according to any of claims 13 to 14, comprising the calibration of the localization of both receivers (14, 16).

16. The method according to claim 15, wherein the calibration comprises the positioning of the probe (4) in two points at least substantially located at the right bisector (36) between both receivers (14, 16).

17. The method according to claim 16, wherein the calibration comprises the positioning of the probe (4) in at least three points spaced apart at regular intervals along the right bisector (36).

18. The method according to any of claims 16 to 17, wherein the positioning of the probe (4) is carried out by means of a positioning auxiliary (30).

19. A method for mapping a surface using a method according to any of claims 13 to 18, wherein the emission, duration measurement and determination steps are repeated for each mapping point.

20. The method according to any of claims 13 to 19, wherein the emitter (12) and receivers (14, 16) use an ultrasound signal.

21. The method according to any of claims 13 to 20, wherein the emitter and receivers are part of a system according to any of claims 1 to 12.

22. The method according to any of claims 13 to 21, wherein the determination of the position of the probe (4) is associated with the analysis of the measurement of the probe (4).
